# EUROPEAN PATENT APPLICATION

(11) **EP 3 422 266 A1**
(43) Date of publication of application: **02.01.2019**
(21) Application number: 17177759.2
(22) Date of filing: 26.06.2017
(51) Int. Cl.: G06Q 10/06, G06Q 50/26

(54) **AUTOMATED GOVERNMENT RESOURCE ALLOCATION**

(71) Applicant: Datalign Ltd, Dublin D12P7K2 (IE)
(72) Inventor: HURRELL, Ray, Dublin, D12P7K2 (IE)
(74) Representative: Bringer, Mathieu

(57) **Abstract**

A government resource allocation method includes periodically sensing with a handheld computing device, different business metrics for different business establishments disposed about a set of geographic subdivisions and uploading the sensed metrics to a database management system as the metrics are sensed. Changes in the business metrics are computed over time for each of the geographic subdivisions based upon the uploaded sensed metrics. Finally, two different records in the database management system corresponding to respectively different allocations of human resources to corresponding ones of the geographic subdivisions are modified by reducing a stored indication of government resources allocated to one of the corresponding ones of the geographic subdivisions having a computed change in business metrics below a threshold value indicative of little or no change, and the other of the corresponding ones of the geographic subdivisions having a computed change in business metrics above a threshold value indicative of large change.

## Description

### BACKGROUND OF THE INVENTION

### Field of the Invention

The present invention relates to government software and more particularly to the computer automated governmental allocation of government resources.

### Description of the Related Art

A government sets and administers public policy and exercises executive, political and sovereign power through customs, institutions, and laws within a state. A government may be classified into many different types--democracy, republic, monarchy, aristocracy, and dictatorship to name just a few. Governments range within a state from a national level to a provincial level to a municipal level and levels there between. Generally, at the national level, government manages the relationship of the state with other nation-states and also the resources incident to international relations including the military. At the national level, government also manages the collection of revenues in the form of taxes and tariffs, and the expenditure of those revenues to provide services and in some cases goods or even currency citizens of the state.

Government at the provincial or municipal level differs from government at the state level in so far as the services provided by provincial and municipal governments oftentimes is more closely associated with the daily lives of those living with the jurisdiction of a corresponding province or municipality-particularly in respect to matters of health, safety and welfare: the police department, the fire department, the hospital, local roadways and waterways, local schools, parks and libraries and the like. Of note, though, at almost all levels of government, revenues are collected and resources allocated to the collection and the expenditure of those revenues.

The resources typically expended by government in connection with the collection of revenues are human resources in which individuals in the employ of government inventory the different citizens and citizen enterprises within the corresponding jurisdiction of government, confirm any obligation by each of the citizens and citizen enterprises to pay taxes to the government, and enforce that obligation by ensuring each citizen and citizen enterprise pays its taxes owed. Of course, there will always be those who underpay or avoid payment entirely of an associated tax obligation to the government. It is the responsibility of the human resources of the revenue collecting arm of government to identify those citizens and citizen organizations who underreport the obligation to pay tax revenue to the government and those who elect not to pay a corresponding tax obligation.

In government, resources charged with executing government policy including revenue collection policy generally are limited. Consequently, substantial strategy is required to most efficiently allocate revenue collection resources in order to most efficiently collect a maximum portion of revenues owed to the government. To optimize the allocation of revenue collection resources, government must know a priori the most likely locations within a jurisdiction where revenues are to be collected while avoiding other locations within the jurisdiction where revenues likely have already been paid to the coffers of government.

### BRIEF SUMMARY OF THE INVENTION

Embodiments of the present invention address deficiencies of the art in respect to government resource allocation and provide a novel and non-obvious method, system and computer program product for automated government resource allocation. In an embodiment of the invention, a computer-implemented government resource allocation method includes periodically sensing with a handheld computing device, different business metrics for different business establishments disposed about a set of geographic subdivisions and uploading the sensed metrics to a database management system as the metrics are sensed. The method also includes computing changes in the business metrics over time for each of the geographic subdivisions based upon the uploaded sensed metrics. Finally, the method includes modifying two different records in the database management system corresponding to respectively different allocations of human resources to corresponding ones of the geographic subdivisions by reducing a stored indication of government resources allocated to one of the corresponding ones of the geographic subdivisions having a computed change in business metrics below a threshold value indicative of little or no change, and the other of the corresponding ones of the geographic subdivisions having a computed change in business metrics above a threshold value indicative of large change.

In one aspect of the embodiment, each of the metrics specify a number of employees of a corresponding one of the business establishments. In another aspect of the embodiment, each of the metrics specify an amount of electricity consumed by a corresponding one of the business establishments. In yet another aspect of the embodiment, the allocations of human resources are a number of revenue collection agents assigned to corresponding ones of the geographic subdivisions. In even yet another aspect of the embodiment, the handheld computing device senses the different business metrics for the different business establishments disposed about the geographic subdivisions by scanning different bar codes at the different business establishments.

In another embodiment of the invention, a data processing system is configured for government resource allocation. The system includes a host computing system wit one or more computers each with memory and at least one processor. The system also includes a database management system executing in the memory of the host computing system and a multiplicity of handheld computing devices communicatively coupled to the host computing system over a computer communications network. Finally, the system includes a government resource allocation module executing in the memory of the host computing system.

The module includes computer program code that upon execution periodically receives from the handheld computing devices, different business metrics for different business establishments disposed about a set of geographic subdivisions, uploads the sensed metrics to the database management system as the metrics are sensed, computes changes in the business metrics over time for each of the geographic subdivisions based upon the uploaded sensed metrics and modifies two different records in the database management system corresponding to respectively different allocations of human resources to corresponding ones of the geographic subdivisions by reducing a stored indication of government resources allocated to one of the corresponding ones of the geographic subdivisions having a computed change in business metrics below a threshold value indicative of little or no change, and the other of the corresponding ones of the geographic subdivisions having a computed change in business metrics above a threshold value indicative of large change.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration of a process for automated government resource allocation;
Figure 2 is a schematic illustration of a data processing system configured for automated government resource allocation; and,
Figures 3A and 3B, taken together, are a flow chart illustrating a process for automated government resource allocation.

### DETAILED DESCRIPTION OF THE INVENTION

Embodiments of the invention provide for automated government resource allocation. In accordance with an embodiment of the invention, a database is maintained of different business metrics for different business units within different geographic areas of a governmental jurisdiction. The database also includes different values for different governmental resources allocated to the different geographic areas, for example human resources. The business metrics may include, for example, a number of employees for a corresponding one of the business units, or an amount of water, power or fuel consumed by a corresponding one of the business units. Thereafter, business metrics for corresponding ones of the different business units are collected in real time at each location of each of the business units within a corresponding one of the geographic areas, and the database is then updated with the collected metrics. Periodically, the metrics in the database are reviewed to identify a threshold change in the business metrics for a threshold number of the business units within a corresponding one of the geographic areas. In response, a database value for the governmental resources allocated to a geographic region in which a threshold decrease in the business metrics are observed is reduced, whilst a database value for the governmental resources allocated to a geographic region in which a threshold decrease in the business metrics are observed is increased.

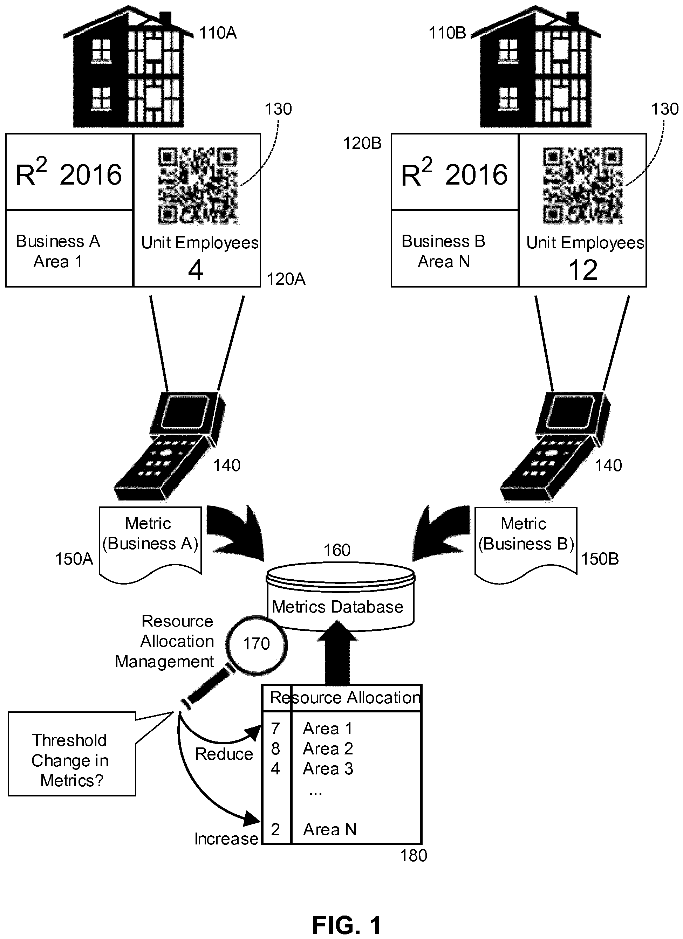

In further illustration, Figure 1 pictorially shows a process for automated government resource allocation. As shown in Figure 1, different business units 110A, 110B are cataloged for different geographic areas (only two business units 110A, 110B being shown for ease of illustration). For instance, different contiguously adjacent business units 110A, 110B may be organized into an aspect and interconnecting aspects surrounded by a navigable road, a block. Different blocks may be organized into a district and different districts into an area and so forth. Each of the business units 110A, 110B may provide a corresponding record 120A, 120B indicating one or more metrics 150A, 150B, such as a number of employees employed by a corresponding one of the business units 110A, 110B, a number of years during which a corresponding one of the business units 110A, 110B has been open for business, an amount of tax revenue paid to to the taxing authorities, an indication of annual revenues collected by a corresponding one of the business units 110, 110B or an amount of energy or fuel consumed by a corresponding one of the business units 110A, 110B.

In this regard, the record 120A, 120B may be a sticker or poster affixed to a window, wall or door of a corresponding one of the business units 110A, 110B with the metrics 150A, 150B being encoded in a bar code 130, such as a quick response (QR) code. Alternatively, the record 120A, 120B may be a radio frequency identification (RFID) device emitting in response to electronic signal stimulation, the metrics 150A, 150B. In the former instance, a bar code scanner 140 may scan the bar code 130 to acquire the metrics 150A, 150B. In the latter circumstance, an RFID scanner (not shown) may sense the RFID device (not shown) to acquire the metrics 150A, 150B. Different governmental human resources then may traverse the aspects of the blocks of the districts of the areas so as to scan the records 120A, 120B utilizing the scanners 140 and upload the metrics 150A, 150B from the scanners 140 wirelessly to a metrics database 160 over a computer communications network. Alternatively, the metrics 150A, 150B may be stored in temporary storage of the scanners 140 and uploaded at a subsequent time to the metrics database 160 directly through a cable to a computer coupled to the metrics database 160 or wirelessly to a computer coupled to the metrics database 160.

Resource allocation management logic 170 stores different resource allocation values for different areas in a resource allocation table 180. More specifically, the different resource allocation values may indicate a number of human resources tasked with managing a particular district or area. Resource allocation management logic 170 additionally monitors the metrics database 160 to identify changes in the metrics 150A, 150B of the different business units 110A, 110B. In particular, the resource allocation management logic 170 may compute an average value for the metrics 150A, 150B for a particular aspect, block, district or area such that the resource allocation management logic 170 may detect a threshold change in the computed average value for the metrics 150A, 150B for a particular aspect, block, district or area and respond to the threshold change by changing a resource allocation value for the corresponding aspect, block, district or area so as to reduce or increase a number or human resources assigned to the corresponding aspect, block, district or area.

More particularly, it may be presumed that a fixed number of human resources are mapped to corresponding districts or areas in the resource allocation table 180. As such, in response to detecting a threshold increase in an average value for the metrics 150A, 150B for a corresponding one of the districts or areas so as to warrant an increase in the number of human resources for the corresponding one of the districts or areas, the resource allocation management logic 170 may concurrently identify a threshold decrease in the average value for the metrics 150A, 150B for a different one of the districts or areas so as to warrant a decrease in the number of human resources for the different districts or areas. Thereafter, the resource allocation management logic 170 may reduce in the table 180 the value for a district or area warranting a decrease in a number of human resources and the the resource allocation management logic 170 may increase in the table 180 the value for a district or area warranting an increase in the number of human resources.

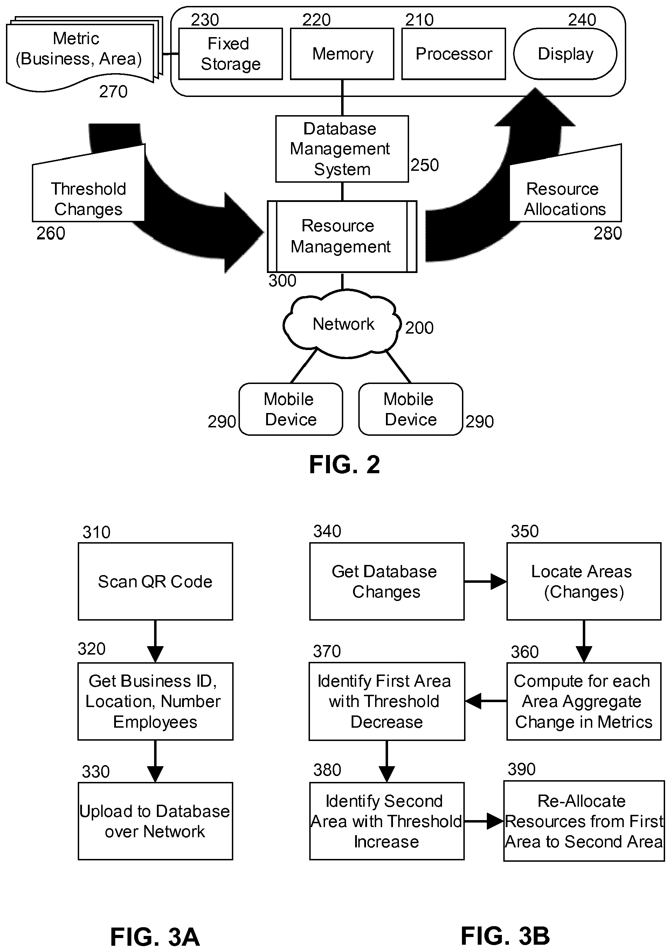

The process described in connection with Figure 1 may be implemented in a computer data processing system. In yet further illustration, Figure 2 schematically shows a computer data processing system configured for automated government resource allocation. The system includes a host computing platform that includes, at the minimum, a processor 210, memory 220, fixed storage 230 and a display 240. The fixed storage 230 includes one or more persistent memory devices including one or more disk drives. A database management system 250 executes in the memory 220 of the host computing platform and manages access to a database disposed in the fixed storage 230. Finally, a resource management module 300 is provided and is communicatively coupled to the database management system 250.

The resource management module 300 includes program code that when executes in the memory 220 of the host computing platform, is enabled to receive scanned metrics 270 from different mobile devices 290 from over computer communications network 200. As well, the program code of the resource management module 300 is enabled upon execution in the memory 220 of the host computing platform to detect threshold changes 260 in individual ones of the metrics 270 or aggregations of the metrics 270 for different districts or areas and to respond to the detected threshold changes 260 by altering the resource allocations 280 and displaying the altered resource allocations 280 in the display 240. Finally, the program code of the resource management module 300 is enabled to respond to one of the detected threshold changes 260 resulting in a warranted decrease in the resource allocations 280 for one district or area by increasing the resource allocations 280 for another district or area in which others of the detected threshold changes 260 warrant an increase in the resource allocations 280.

In even yet further illustration of the operation of the resource management module 300, Figures 3A and 3B, taken together, are a flow chart illustrating a process for automated government resource allocation. Considering initially Figure 3A, beginning in block 310 a QR code is scanned by a mobile scanning device at a business unit within an aspect of a block of a district of an area within a governmental jurisdiction. In block 320, a business identifier, location and number of employees is received in the memory of the mobile scanning device and in block 330, the business identifier, location and number of employees are uploaded to a database from over a computer communications network a metrics for the business unit.

Turning now to Figure 3B, in block 340, the database is monitored and changes are detected therein. In block 350, one or more areas are identified in which changes in corresponding metrics are detected in the database. In block 360, for each area in which changes are identified, an aggregation of the metrics is computed such as an average value of the metrics. In block 370, a first one of the areas is identified in which a threshold decrease in the average value of the metrics is determined as a result of the changes. Likewise, in block 380, a second one of the areas is identified in which a threshold increase in the average value of the metrics is determined as a result of the changes. Consequently, in block 390, a re-allocation of resources is applied moving resources from the first one of the areas to the second one of the areas.

The present invention may be embodied within a system, a method, a computer program product or any combination thereof. The computer program product may include a computer readable storage medium or media having computer readable program instructions thereon for causing a processor to carry out aspects of the present invention. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network. The computer readable program instructions may execute entirely on the user's computer, partly on the user's computer, as a stand-alone software package, partly on the user's computer and partly on a remote computer or entirely on the remote computer or server. Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Finally, the terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A computer-implemented government resource allocation method comprising:
periodically sensing with a handheld computing device, different business metrics for different business establishments disposed about a set of geographic subdivisions;
uploading the sensed metrics to a database management system as the metrics are sensed;
computing changes in the business metrics over time for each of the geographic subdivisions based upon the uploaded sensed metrics; and,
modifying two different records in the database management system corresponding to respectively different allocations of human resources to corresponding ones of the geographic subdivisions by reducing a stored indication of government resources allocated to one of the corresponding ones of the geographic subdivisions having a computed change in business metrics below a threshold value indicative of little or no change, and the other of the corresponding ones of the geographic subdivisions having a computed change in business metrics above a threshold value indicative of large change.

2. The method of claim 1, wherein each of the metrics specify a number of employees of a corresponding one of the business establishments.

3. The method of claim 1, wherein each of the metrics specify an amount of electricity consumed by a corresponding one of the business establishments.

4. The method of claim 1, wherein the allocations of human resources are a number of revenue collection agents assigned to corresponding ones of the geographic subdivisions.

5. The method of claim 1, wherein the handheld computing device senses the different business metrics for the different business establishments disposed about the geographic subdivisions by scanning different bar codes at the different business establishments.

6. A data processing system configured for government resource allocation, the system comprising:
a host computing system comprising one or more computers each with memory and at least one processor;
a database management system executing in the memory of the host computing system;
a multiplicity of handheld computing devices communicatively coupled to the host computing system over a computer communications network; and,
a government resource allocation module executing in the memory of the host computing system, the module comprising computer program code that upon execution periodically receives from the handheld computing devices, different business metrics for different business establishments disposed about a set of geographic subdivisions, uploads the sensed metrics to the database management system as the metrics are sensed, computes changes in the business metrics over time for each of the geographic subdivisions based upon the uploaded sensed metrics and modifies two different records in the database management system corresponding to respectively different allocations of human resources to corresponding ones of the geographic subdivisions by reducing a stored indication of government resources allocated to one of the corresponding ones of the geographic subdivisions having a computed change in business metrics below a threshold value indicative of little or no change, and the other of the corresponding ones of the geographic subdivisions having a computed change in business metrics above a threshold value indicative of large change.

7. The system of claim 6, wherein each of the metrics specify a number of employees of a corresponding one of the business establishments.

8. The system of claim 6, wherein each of the metrics specify an amount of electricity consumed by a corresponding one of the business establishments.

9. The system of claim 6, wherein the allocations of human resources are a number of revenue collection agents assigned to corresponding ones of the geographic subdivisions.

10. The system of claim 6, wherein each handheld computing device senses the different business metrics for the different business establishments disposed about the geographic subdivisions by scanning different bar codes at the different business establishments.

11. A computer program product for government resource allocation, the computer program product comprising a computer readable storage medium having program instructions embodied therewith, the program instructions executable by a device to cause the device to perform a method comprising:
periodically sensing with a handheld computing device, different business metrics for different business establishments disposed about a set of geographic subdivisions;
uploading the sensed metrics to a database management system as the metrics are sensed;
computing changes in the business metrics over time for each of the geographic subdivisions based upon the uploaded sensed metrics; and,
modifying two different records in the database management system corresponding to respectively different allocations of human resources to corresponding ones of the geographic subdivisions by reducing a stored indication of government resources allocated to one of the corresponding ones of the geographic subdivisions having a computed change in business metrics below a threshold value indicative of little or no change, and the other of the corresponding ones of the geographic subdivisions having a computed change in business metrics above a threshold value indicative of large change.

12. The computer program product of claim 11, wherein each of the metrics specify a number of employees of a corresponding one of the business establishments.

13. The computer program product of claim 11, wherein each of the metrics specify an amount of electricity consumed by a corresponding one of the business establishments.

14. The computer program product of claim 11, wherein the allocations of human resources are a number of revenue collection agents assigned to corresponding ones of the geographic subdivisions.

15. The computer program product of claim 11, wherein the handheld computing device senses the different business metrics for the different business establishments disposed about the geographic subdivisions by scanning different bar codes at the different business establishments.
